(19) Europäisches Patentamt
European Patent Office
Office européen des brevets

(11) Numéro de publication: **0 264 982 B1**

# (12) FASCICULE DE BREVET EUROPEEN

(45) Date de publication du fascicule du brevet: **09.01.91**

(21) Numéro de dépôt: **87201699.3**

(22) Date de dépôt: **08.09.87**

(51) Int. Cl.5: **C 08 F 283/06,** C 08 F 265/04 // (C08F283/06, 214:00),(C08F265/04, 214:00)

## (54) Procédé pour la fabrication de polymères d'halogénures de vinyle modifiés par des polymères de composés hétérocycliques oxygénés.

(30) Priorité: **18.09.86 FR 8613204**

(43) Date de publication de la demande: **27.04.88 Bulletin 88/17**

(45) Mention de la délivrance du brevet: **09.01.91 Bulletin 91/02**

(84) Etats contractants désignés: **AT BE CH DE ES FR GB GR IT LI LU NL SE**

(56) Documents cités:
**DE-A-1 959 437**
**FR-A-2 112 260**
**FR-A-2 277 119**

(73) Titulaire: **SOLVAY & Cie (Société Anonyme)**
**Rue du Prince Albert, 33**
**B-1050 Bruxelles (BE)**

(72) Inventeur: **Malfroid, Pierre**
**Avenue Félix Lacourt, 163**
**B-5980 Grez-Doiceau (BE)**
Inventeur: **Nguyen, Qui Long**
**Avenue des Hêtres, 13**
**B-4200 Sclessin Liege (BE)**
Inventeur: **Blondin, Jean-Marie**
**Rue de Hellenes, 47**
**B-1050 Bruxelles (BE)**

(74) Mandataire: **Marckx, Frieda et al**
**Solvay & Cie Département de la Propriété Industrielle 310, rue de Ransbeek**
**B-1120 Bruxelles (BE)**

EP 0 264 982 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

La présente invention concerne un procédé pour la fabrication de polymères d'halogénures de vinyle modifiés par des polymères de composés hétérocycliques oxygénés.

Il est connu de modifier les propriétés des polymères thermoplastiques, telles que par exemple leur plasticité, leur processabilité ou leur résistance au choc, par mélange avec d'autres polymères, dits polymères modifiants, et en particulier, celles des polymères d'halogénures de vinyle, tels que le polychlorure de vinyle par mélange avec des polymères de composés hététrocycliques oxygénés, tels que la polycaprolactone (brevet US—A—3592877) et les polyoxydes d'alkènes, tels que le polyoxyde de propylène et la polyépichlorhydrine (brevets FR—A—1545796 et FR—A—1559479).

La modification des propriétés des polymères thermoplastiques par mélange avec des polymères modifiants nécessite la fabrication, la séparation et le séchange de chacun des polymères destinés au mélange. Les mélanges polymériques résultants manquent généralement d'homogénéité et souffrent donc d'une certaine irreproductibilité de leurs propriétés. Enfin, la fabrications de polymères de composés hétérocycliques oxygénés s'effectue habituellement dans des solvants organique inertes qu'il convient, en fin de polymérisation, de récupérer, d'épurer et de recycler à la polymérisation.

Il est également connu de modifier les propriétés du polychlorure de vinyle par polymérisation radicalaire avec greffage du chlorure de vinyle en présence de polymères préformés d'oxydes d'alkènes et d'épichlorhydrine (polymères troncs) (demandes de brevets FR—A—2 112 260 et DE—A—1 959 437). Dans ce cas, il convient également de fabriquer d'abord les polymères de composés hétérocycliques, de les séparer de leur milieu de polymérisation, généralement constitué par un solvant organique, et de les sécher avant de pouvoir les mettre en oeuvre comme polymères troncs à la polymérisation avec greffage du chlorure de vinyle. En outre, le procédé de greffage comprend généralement une opération assez longue de prédissolution du polymère tronc dans le chlorure de vinyle ou dans un solvant.

La présente invention vise à procurer un procédé pour la fabrication de polymères d'halogénures de vinyle modifiés par des polymères de composés hétérocycliques oxygénés qui ne présente pas les inconvénients précités et qui, en particulier, conduit d'une manière fort simple et économique à l'obtention de polymères modifiés d'une très grande homogénéité.

A cet effet, la présente invention concerne un procédé selon lequel, dans une première étape, on polymérise par voie ionique un composé hétérocyclic oxygéné dans un halogénure de vinyle et, dans une seconde étape, on polymérise par voie radicalaire en dispersion aqueuse et en présence du milieu de polymérisation provenant de l'étape première ledit homogénure de vinyle, éventuellement additionné d'autres monomères insaturés polymérisables par voie radicalaire (comonomères).

Il est connu de polymériser par voie ionique des composés hétérocycliques oxytgénés, tels que les oxydes d'alkènes et les lactones, dans des solvants organiques inertes, tels que les éthers, les alkanes, les hydrocarbures aromatiques et les hydrocarbures halogénés (brevets FR—A—2183545 et FR—A—2258410).

Un effet surprenant du procédé selon l'invention réside dans la possibilité de pouvoir réaliser la polymérisation par voie inonique des composés hétérocycliques oxygénés dans un monomère vinylique halogéné sans que celui-ci n'influe sur le catalyseur ionique et de pouvoir réaliser ultérieurement la polymérisation dudit halogénure de vinyle par voie radicalaire en dispersion aqueuse en présence du milieu de polymérisation provenant de l'étape première sans que les résidus catalytiques et/ou les monomères résiduaires de l'étape première n'influent sur le déroulement de la polymérisation en dispersion aqueuse du monomère vinylique halogéné.

Par composé hétérocyclique oxygéné, on entend désigner les éthers et les esters cycliques et leurs mélanges.

Parmi les éthers cycliques, on donne la préférence à ceux dont le cycle hétéroatomique comprend de 3 à 7 atomes. A titre d'exemples de pareils éthers cycliques, on peut mentionner l'oxyde d'éthylène (oxirane), l'oxétane, le tétrahydrofurane (ou oxolane), le tétrahydropyrane (ou oxane) et l'oxépane et leurs dérivés de substitution alkylés et/ou halogénés. Les éthers cycliques particulièrement préférés sont les dérivés de l'oxirane. Une liste des dérivés de l'oxirane utilisable à l'étape première du procédé selon l'invention sont les époxyalkanes, les halogénoépoxyalkanes, les éthers et esters glycidyliques et, en particulier, les oxydes d'éthylène et de propylène, l'épichlorhydrine, l'éther allylglycidylique, le méthacrylate de glycidyle et leurs mélanges.

Parmi les esters cycliques, on donne la préférence aux lactones et, en particulier, aux lactones dont le cycle hétéroatomique comprend de 4 à 16 atomes. A titre d'exemples de pareilles lactones, on peut mentionner la β-propiolactone, la γ-butyrolactone, la δ-valérolactone, l'ε-carprolactone, la capryllactone, et la laurolactone, ainsi que leurs dérivés de substitution alkylés et/ou halogénés, tels que la β,β-bis(chlòro-méthyl)-β-propiolactone, la pivololactone, les méthylcaprolactones et les chlorocaprolactones. Les esters cycliques particulièrement préférés sont les lactones non substituées dont le cycle hétéroatomique comprend 4, 7 ou 8 atomes, c'est-a-dire la β-propiolactone, l'ε-caprolactone et la ξ-oenantholactone. Un ester cyclique tout particulièrement préféré est l'ε-caprolactone.

Comme dit précédement, on peut mettre en oeuvre plusieurs composés hétérocycliques oxygénés, et ce, soit simultanément avec formation de copolymères statistiques, soit successivement avec formation de copolymère à blocs. Les propriétés des polymères de composés hétérocycliques oxygénés modifiants) peuvent donc être modifiées en fonction du choix du ou des monomères hétérocycliques oxygénés et de

leur mode de mise en oeuvre, simultané ou successif.

Par halogénure de vinyle, on entrend désigner les monomères vinyliques halogénés répondant à la formule générale:

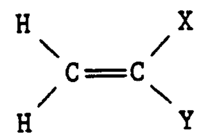

dans laquelle X représente un atome d'halogène et Y représente un atome d'hydrogène ou d'halogène identique ou différent de X. Les monomères vinyliques halogénés utilisables à l'étape première comprennent donc les halogénures de vinyle et de vinylidène et leurs mélanges et, en particulier, les chlorures, les bromures, les fluorures, les iodures, les chlorofluorures de vinyle et de vinylidène et leurs mélanges. On donne néanmoins la préférence aux chlorures et aux fluorures de vinyle et de vinylidène. Un monomère vinylique halogéné utilisable à l'étape première qui est tout particulièrement préféré ets le chlorure de vinyle.

Les comonomères insaturés polymérisables par voie radicalaire à la deuxième étape peuvent être choisis parmi tous les comonomères usuels des monoomères vinyliques halogénés. A titre d'exemples de pareils commonomères, on peut citer les oléfines, les oléfines halogénées, les éthers vinyliques, les esters vinyliques, ainsi que les esters, les nitriles et les amides acryliques.

Par polymère d'halogénure de vinyle, on entend donc désigner les homopolymères et les copolymères, statistiques ou à blocs, de monomères vinyliques halogénés tels que définis ci-dessus contenant au moins 50% en poids d'halogènure de vinyle et, de préférence au moins 65% en poids.

Par polymère d'halogénure de vinyle modifié, on etend donc désigner les polymères, homo- et copolymères, d'halogénures de vinyle tels que définis ci-dessus modifiés par des polymères, homo- ou copolymères, de composés hétérocycliques oxygénés tels que définis ci-dessus.

La polymérisation par voie ionique du (des) composé(s) hétérocyclique(s) oxygéné(s) s'effectue à l'intervention d'un ou plusieurs catalyseurs ioniques choisi parmi les catalyseurs ioniques (cationiques et anioniques) usuels. A titre d'exemples de pareils catalyseurs, on peut citer les catalyseurs Friedel-Crafts, les catalyseurs Ziegler-Natta, les alkylmétaux, tels que les alkylaluminiums, les alkylzincs et les alkylétains. On donne néanmoins la préférence aux catalyseurs anioniques et, plus particulièrement encore aux catalyseurs anioniques coordinés. A titre d'exemples de pareils catalyseurs anioniques coordinés, ou peut mentionner les produits de réaction d'alkylmétaux, tels que les alkylaluminiums et les alkylzincs, aved de l'eau et/ou un alcool ou un polyol. Des catalyseurs anioniques coordinés tout particulièrement préférés sont constitutés par des dérivés alkylés et alkoxylés de l'aluminium, complexés par le tétrahydrofurane, de formule générale:

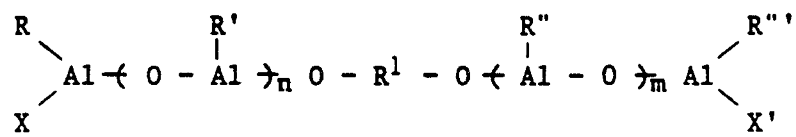

dans laquelle n et m représentent des nombres entiers compris entre 0 et 10 dont la somme égale au moins 1; R, R', R'' et R''' représentent des groupes hydrocarbonés contenant de 1 à 18 atomes de carbone; X et X' représentent de l'hydrogène, du chlore ou un groupe R; et $R^1$ représente un groupe hydrocarboné contenant de 2 à 20 atomes de carbone.

La fabrication de ces catalyseurs est décrite dans les brevets FR—A—2183545 et FR—A—2258410.

La concentration catalytique peut varier dans une assez large mesure. Le catalyseur est généralement mis en oeuvre à raison de 0,001 à 0,1 mole de métal actif par mole de composé hétérocyclique oxygéné et, de préférence, de 0,01 à 0,05 mole de métal actif par mole de composé hétérocyclique oxygéné.

Les quantités respectives de composé(s) hétérocyclique(s) oxygénés) et de monomère vinylique halogéné mis en oeuvre à l'étape première ne sont pas critiques. Elles dépendent essentiellement de la quantité de polymère modifiant que l'on souhaite incorporer au polymère final d'halogénure de vinyle modifié. On tiendra donc compte, le cas échéant, de la quantité d'autre(s) monomère(s) insaturé(s) polymérisable(s) par voie radicalaire que l'on à décidé d'ajouter au milieu de polymérisation issu de l'étape première avant d'entamer la seconde étape, c'est-à-dire la polymérisation par voie radicalaire de l'halogénure de vinyle et le cas échéant, d'autre(s) monomère(s) polymérisable(s) par cette voie.

Les conditions générales de la polymérisation ionique des composés hétérocyclique oxygénés sont celles habituellement appliquées pour ce type de polymérisation, si ce n'est que la polymérisation s'effectue au sein d'un monomère vinylique halogéné et non dans un solvant organique usuel. Pour fixer les idées, la température de la réaction de polymérisation se situe généralement en-dessous de 100°C et le plus souvent entre 15 et 60°C environ et la pression opératoire est égale à la pression de vapeur saturante du monomère vinylique halogéné ou du mélange de monomères vinyliques halogénés à la température de polymérisation choisie. La durée de polymérisation se situe généralement entre quelques minutes et

quelques dizaines de minutes. Le déroulement de la réaction de polymérisation (exothermique) est suivi par la mesure de la différence de température entre le liquide caloporteur et le milieu de polymérisation (Δt positif). On considère la réaction comme terminée lorsque la différence de température Δt est égale à zéro. Habituellement, on maintient encore pendant une heure le milieu à température de polymérisation.

Après la polymérisation par voie ionique de composé hétérocyclique oxygéné, on laisse refroidir le milieu de polymérisation à température ambiante. Ensuite, on y introduit tous les ingrédients nécessaires à la polymérisation classique par voie radicalaire en dispersion aqueuse du monomère vinylique halogéné, y compris, le cas échéant, le ou les comonomères insaturés polymérisables par voie radicalaire en commençant par l'eau.

Par polymérisation en dispersion aqueuse, on etend désigner toutes les techniques de polymérisation où les monomères vinyliques sont dispersés sous forme de gouttelettes dans une phase aqueuse liquide et, en particulier, la polymérisation en émulsion, en suspension ou en microsuspension aqueuses.

Dans la polymérisation en émulsion aqueuse on peut utiliser comme agent de dispersion n'importe quel agent émulsionnant et, en particulier, les agents émulsionnants anioniques tels que le benzylsulfonate de sodium ou le dodécylbenzènesulfonate de sodium, et les agents émulsionnants non ioniques. On peut aussi utiliser n'importe quel initiateur de polymérisation radicalaire hydrosoluble et en particulier les persulfates.

Dans la polymérisation en suspension, on utilise généralement comme agents de dispersion des agents dispersants conventionnels tels que les solides finement dispersés, des gélatines, des éthers cellulosiques solubles dans l'eau, des polymères synthétiques comme les polyacétates de vinyle partiellement saponifiés, la polyvinylpyrrolidone, les copolymères acétate de vinyle anhydride maléique et leurs mélanges. On peut aussi, en même temps que les agents dispersants mettre en oeuvre des agents tensioactifs. La quantité d'agent dispersant mise en oeuvre varie en générale entre 0,5 et 1,5% en poids par rapport à l'eau.

Dans la polymérisation en microsuspension, encore appelée parfois en dispersion aqueuse homogénéisée, on réalise une émulsion de gouttelettes de monomères, grâce à une agitation mécanique puissante et habituellement à la présence d'agents émulsionnants de même nature que ceux mentionées plus haut, et on réalise la polymérisation à l'intervention d'initiateurs liposolubles.

N'importe quel initiateur liposoluble peut être utilisé dans la polymérisation en suspension ou en microsuspension. A titre d'exemples, on peut citer les peroxydes tels que le peroxyde de di-tertiobutyle, le peroxyde de lauroyle et le peroxyde d'acétylcyclohexylsulfonyle, les composés azoïques tels que l'azo-bis-isobutyronitrile et l'azo-bis-2,4-diméthylvaléronitrile, les peroxydicarbonates de dialkyles tels que les peroxydicarbonates de diéthyle, de diisopropyle, de dicyclohexyle et de di-tertiobutylcyclohexyle, et les alkylbores. En général, ces initiateurs sont mis en oeuvre à raison de 0,01 à 1% en poids par rapport aux monomères.

Il est particulièrement avantageux d'appliquer le procédé suivant l'invention à la polymérisation en suspension aqueuse.

En plus d'agents dispersants ou émulsionnants et d'initiateurs, le mileu de polymérisation peut encore comprendre divers additifs normalement mis en oeuvre dans les procédés conventionnels de polymérisation en dispersion aqueuse. A titre d'exemples de pareils additifs, on peut citer les agents régulateurs du diamètre des particules de polymère, les agents régulateurs du poids moléculaire, les stabilisants et les colorants.

Les conditions de polymérisation par voie radicalaire ne diffèrent pas de celles habituellement mises en oeuvre. C'est ainsi que dans le cas de la fabrication de polymères modifiés du chlorure de vinyle, la température de polymérisation est en général comprise entre 35 et 80°C et la pression absolue est en général inférieure à 15 kg/cm$^2$. La quantité d'eau mise en oeuvre est en général telle que le poids total des monomères représente 20 à 50% du poids total de l'eau et des monomères.

Les polymères d'halogénures de vinyle obtenus suiant le procédé de l'invention sont isolés de manière conventionnelle de leur milieu de polymérisation en dispersion aqueuse.

Le procédé selon l'invention permet la fabrication simple et rapide, sans séparation intermédiaire du polymère modifiant, de polymères d'halogénures de vinyle homogènes modifiés à façon par le biais du choix de la nature, de la quantité et du mode de mise en oeuvre (simultané ou successif) du/des composés hétérocycliques oxygénés.

Les exemples qui suivent illustrent le procédé de l'invention.

Le catalyseur utilisé dans tous les exemples est un dérivé alkylé et alkoxylé de l'aluminium, complexé par le tétrahydrofurane, obtenu par réaction d'un mole de triisobutylaluminium, de 0,25 mole de butanediol-1,4 et de 0,25 mole d'eau et complexé par 3,7 moles de tétrahydrofurane (suivant l'exemple 4 du brevet FA—A—2183545). La concentration catalytique s'élève à 0,02 mole d'aluminium par mole de composé hétérocyclique oxygéné dans tous les exemples.

Exemple 1

L'exemple 1 illustre la fabrication de polychlorure de vinyle modifié par de la polyepichlorhydrine.

On utilise un réacteur de laboratoire en acier inoxydable de 3 litres de contenance, muni d'une double enveloppe pour la circulation d'un fluide caloporteur, d'un agitateur à pales conventionnel en acier

inoxydable, d'un jeu de tubes jaugeurs pour l'introduction des réactifs et d'un système classique de régulation de température.

Etape 1

On effectue trois mises sous vide, suivies de rinçages à l'azote. Sous balayage à l'azote et à 25°C, on introduit 0,6 g de catalyseur organométallique, exprimé en aluminium. On isole le réacteur et on met l'agitateur en marche (250 t/min.). On introduit 1000 g de chlorure de vinyle, par tube jaugeur, et on chauffe le contenu du réacteur à 35°C. La température de consigne atteinte, on introduit 100 g d'épichlorhydrine par tube jaugeur (temps = $t_o$). Après 15 minutes de marche à 35°C (temps = $t_o$ + 15 minutes), on arrête l'agitation. Le taux de conversion de 'épichlorhydrine est estimé à 100% (essai à blanc).

Etape 2

Cinq minutes après l'arrêt de l'agitation, on introduit en 15 minutes, par tube jaugeur, 1500 g d'une solution aqueuse à 3,33 g/l d'hydroxypropylméthylcellulose (viscosité à 20°C en solution aqueuse à 2%: 100 mPa·s). On remet l'agitateur en marche (500 t/min) et on refroidit le contenu du réacteur à 30°C. On introduit alors 10 ml d'un solution à 15% dans le dichlorométhane d'azo-bis-isobutyronitrile. Le contenu du réacteur est porté et maintenu à 62°C. Lorsque la pression opératoire a chuté de 3 bars, on introduit 15 ml d'ammoniaque 2N, on refroidit le contenu du réacteur, on réduit l'agitation à environ 50 t/min et on dégaze. A pression atmosphérique, on effectue un traitement thermique (15 minutes à 75°C), refroidit le contenu du réacteur et on élimine le chlorure de vinyle résiduaire par traitement avec de la vapeur d'eau. Après essorage et séchage, on recueille 1010 g de résine de polychlorure de vinyle modifié par de la polyépichlorhydrine (PVC modifié) sous la forme de grains agglomérés blanchâtres preséntant un diamètre moyen de 150 µm et une teneur en chlore de 54,4% en poids.

Le polychlorure de vinyle modifié obtenu (échantillon 1) a été comparé, d'une part, avec du polychlorure de vinyle fabriqué dans les conditions de l'étape 2 (Kwert = 64) (échantillon 2) et, d'autre part, avec un mélange de polychlorure de vinyle fabriqué dans les conditions de l'étape 2 (Kwert = 64) et de polyépichlorhydrine (PEPI) fabriquée dans les conditions de l'étape 1 (rapport pondéral PVC/PEPI dans le mélange 90:10) (échantillon 3).

Les trois échantillons ont été examinés dans une composition contenant, pour 100 parties en poids de résine(s), 2 parties d'un stabilisant à l'étain, 0,15 partie d'un lubrifiant et 1 partie d'un agent polymérique facilitant la mise en oeuvre.

Des prémélanges de 150 g chacun ont été malaxés durant 5 minutes à 190°C sur malaxeur à cyclindres. Les crêpes obtenus ont ensuite été pressés durant 5 minutes à 200°C pour former des plaques de 4 mm d'épaisseur.

Le tableau I en annexe rassemble les résultats des évaluations effectuées sur les crêpes et les plaques des trois échantillons.

Exemple 2

L'exemple 2 illustre la fabrication de polychlorure de vinyle modifié par un copolymère statistique d'ε-caprolactone et d'oxyde de propylène.

Etape 1

On procède comme à l'étape 1 de l'exemple 1, sauf qu'on met oeuvre 1,69 g de catalyseur organométallique (exprimé en aluminium) et 700 g de chlorure de vinyle et qu'à la température de copolymérisation de 50°C (temps = $t_o$), on introduit un mélange de 240 g d'ε-caprolactone et 60 g d'oxyde de propylène. La copolymérisation de l'ε-caprolactone et de l'oxyde de propylène est arrêtée après 120 minutes ($t_o$ + 120 min.) à 50°C. Le taux de conversion est estimé à 96,3% (essai à blanc).

Etape 2

L'étape 2 est conforme à l'étape 2 de l'exemple 1, sauf qu'on introduit à 50°C, après arrêt de l'agitation, 1500 g d'eau contenant 52,5 g d'une solution à 2% alcool polyvinylique (viscosité à 20°C en solution aqueuse à 4% : 6 mPa·s et taux d'hydrolyse molaire de 72%). Après refroidissement du contenu du reacteur à 30°C sous agitation (500 t/min.), on introduit 1,4 g de peroxyde de lauroyle et 0,7 g de peroxydicarbonate de dicétyle dissous dans 20 ml de dichlorométhane. Le contenu du réacteur est porté à 54°C (temps 5 $t_o$). A $t_o$ + 30 minutes, on introduit par tube jageur 70 ml d'une solution à 2% d'hydroxypropylméthylcellulose de caractéristiques identiques à celle mise en oeuvre à l'exemple 1. Lorsque la pression opératoire a chuté de 3 bars, on procède exactement come à l'étape 2 de l'exemple 1. On recueille 919 g de résine de polychlorure de vinyle modifié par un copolymère statistique d'ε-caprolactone et d'oxyde de propylène (PVC modifié) sous la forme de grains sphériques translucides, non collants, présentant un diamètre moyen de 150 µm et une teneur en chlore de 39% en poids.

Le polychlorure de vinyle modifié obtenu (échantillon 1) a été comparé avec un mélange de polychlorure de vinyle fabriqué dans les conditions de létape 2 (Kwert = 71) et d'un copolymère statistique d'ε-caprolactone et d'oxyde de propylène fabriqué dans les conditions de l'étape 1 (rapport pondéral PVC/copolymère dans le mélange 70:30) (échantillon 2).

Les deux échantillons ont été examinés dans une composition identique à celle de l'exemple 1. Des

prémélanges de 150 g chacun ont été malaxés durant 5 minutes à 160°C et les crêpes obtenus pressés durant 3,5 minutes à 165°C pour former des plaques de 4 mm d'épaisseur.

Le crêpe de l'échantillon 1 est nettement moins opaque, plus brillant et plus blanchâtre que celui de l'échantillon 2. La dureté Shore A initiale (norme NF T51—109) sur plaque pressée de 4 mm d'épaisseur à 23°C s'élève à 85 pour l'échantillon 1 et à 91 pour l'échantillon 2. Pour atteindre und dureté Shore A initiale de 85, il convient de mélanger environ 30 parties en poids de phtalate de di-2-éthylhexyle (DOP) avec 70 parties en poids de polychlorure de vinyle de Kwert = 71.

Exemple 3

L'exemple 3 illustre la fabrication de polychlorure de vinyle modifié par de la poly-ε-caprolactone.

Etape 1

On procédé comme à l'étape 1 de l'exemple 2, sauf qu'on met en oeuvre 1,43 g de catalyseur organométallique exprimé en aluminium et qu'au temps $t_o$, on introduit 300 g d'ε-caprolactone. La polymérisation de l'ε-caprolactone est arrêtée après 90 min. ($t_o$ + 90 min.) à 50°C. La taux de conversion est estimé à 99% (essai à blanc).

Etape 2

L'étape 2 est conforme en tous points à l'étape 2 de l'exemple 2. On recueille 924 g de résine de polychlorure de vinyle modifié par de la poly-ε-caprolactone (PVC modifié) sous la forme de grains sphériques transparents, non collants, présentant un diamètre moyen de 180 μm et une teneur en chlore de 38,7% en poids.

Le polychlorure de vinyle modifié obtenu (échantillon 1) a été comparé avec un mélange de polychlorure de vinyle fabriqué dans les conditions de l'étape 2 (Kwert = 71) et de poly-ε-caprolactone fabriquée dans les conditions de l'étape 1 (rapport pondéral PVC/poly-ε-caprolactone dans le mélange (70:30) (échantillon 2).

Les deux échantillons onte été examinés dans une composition identique à celle de l'exemple 1. Les crêpes et les plaques ont été fabriqués dans des conditions de malaxage et de pressage identiques à celles de l'exemple 2. Les granules de poly-ε-caprolactone fondant vers 65°C, la gélification du mélange de l'échantillon 2 est difficile. La gélification de l'échantillon 1 par contre ne pose aucun problème. Les plaques des deux échantillons sont transparentes et légèrement jaunâtres. La dureté Shore A initiale (norme NF T51—109) sur plaque pressée de 4 mm d'épaisseur à 23°C s'éléve à 79 pour l'échantillon 1 et à 88 pour l'échantillon 2. Pour atteindre une duréte Shore A initiale de 78, il convient de mélanger environ 35 parties en poids de phtalate di 2-éthyhexyle (DOP) avec 65 parties en poids de polychlorure de vinyle de Kwert = 71.

Exemple 4

Cet exemple illustre la fabrication d'un copolymère de chlorure de vinyle et d'acrylate de 2-éthylhexyle modifié par de la poly-ε-caprolactone.

Etape 1

On procède comme à l'étape 1 de l'exemple 2 sauf qu'on met en oeuvre 0,95 g catalyseur organométallique, exprimé en aluminium, et 656 g de chlorure de vinyle et qu'au temps $t_o$, on introduit 200 g d'ε-caprolactone. La polymérisation de l'ε-caprolactone est terminée après 120 minutes à 50°C. Le taux de conversion est estimé à 99% (essai à blanc).

Etape 2

On procède comme à l'étape 2 de l'exemple 2 sauf qu'on introduit à 50°C, après arrêt de l'agitation 1,500 g d'eau contenant 150 g d'une solution à 2% d'alcool polyvinylique et qu'après refroidissement du contenu du réacteur à 30°C sous agitation (500 t/min.), on introduit 144 g d'acrylate de 2-éthylhexyle (AEH). On injecte ensuite 1,6 g de peroxyde de lauroyle et 0,8 g de peroxydicarbonate de dicétyle dissous dans 20 ml de dichlorométhane. Lorsque la pression opératoire a chuté de 3 bars, on procède exactement comme à l'étape de l'exemple 1. On recueille 958 g de copolymère de chlorure de vinyle et d'acrylate de 2-éthylhexyle modifié par de la poly-ε-caprolactone (PVC modifié) sous la forme de grains sphériques transparents, non collants présentant un diamètre moyen de 200 μm et une teneur en chlore de 36,6% en poids.

Le polychlorure de vinyle modifié (échantillon 1) a été comparé avec deux mélanges (échantillons 2 et 3) comprenant tous deux un copolymère de chlorure de vinyle et d'acrylate de 2-éthylhexyle fabriqué dans les conditions de l'étape 2 (indice de viscosité dans la cyclohexanone à 5 g/l et à 25°C: environ 140 ml/g) à raison de 80 parties en poids, d'une part, de poly-ε-caprolactone fabriquée dans les conditions de l'étape 1 (échantillon 2) et d'autre part, du phtalate de di 2-éthylhexyle (DOP) (échantillon 3) à raison de 20 parties en poids.

Les trois échantillons ont été examinés dans une coposition identique à celle de l'exemple 1. Les crêpes et les plaques ont été fabriqués dans des conditions de malaxage et de pressage identiques à celles de l'exemple 2.

Le tableau II en annexe rassemble les résultats des évaluations effectuées sur les crêpes et les plaques des trois échantillons.

Exemple 5

Cet exemple illustre la fabrication de polychlorure de vinyle modifié par de la poly-ε-caprolactone dans laquelle le chlorure de vinyle (étape 2) est polymérisé en émulsion aqueuse.

On utilise un réacteur la laboratoire identique à celui utilisé à l'exemple 1.

Etape 1

On procèdè comme à l'étape 1 de l'exemple 1 sauf qu'on introduit 0,24 g de catalyseur organométallique, exprimé en aluminium, qu'on chauffe le contenu du réacteur à 40°C et que la température de consigne atteinte, on introduit 50 g d'ε-caprolactone par tube jaugeur (temps = $t_o$). Après 90 minutes de marche à 40°C (temps = $t_o$ + 90 min.), on arrête l'agitation. Le taux de conversion de la poly-ε-caprolactone est estimé à 99% (essai en blanc).

Etape 2

Cinq minutes après l'arrêt de l'agitation, on introduit en 15 minutes, par tube jaugeur, 1500 g d'une solution aqueuse contenant 23 g d'une solution à 65,2% de dioctylsulfosuccinate. On remet l'agitateur en marche (500 t/min.) et on refroidit le contenu de réacteur à 30°C. On introduit alors 15 $cm^3$ d'une solution à 15% dans le dichlorométhane d'azo-bis-isobutyronitrile. le contenu du réacteur est porté et maintenu à 62°C. Lorsque la pression opératoire a chuté de 3,5 bars, on chauffe le contenue de l'autoclave de polymérisation à 80°C. Lorsque la pression atteint 6 bars, on réduit l'agitation à environ 50 t/min. et on dégaze. La pression atmosphérique atteinte, on amène le latex à ébullition en tirant sous vide. Aprés 20 min. d'ébullition, le latex est refroidi à température ambiante. Le latex obtenu contient 34% de matières sèches à base de polychlorure de vinyle modifié par de la poly-ε-caprolactone. La résine obtenue après séchage par atomisation a une teneur en chlore de 530 g/kg (composition PVC-PLC ≃ 93—7).

Exemple 6

Cet exemple illustre la fabrication de polychlorure de vinyle modifié par de la poly-ε-caprolactone dans laquelle le chlorure de vinyle (étape 2) est polymérisé en microsuspension aqueuse, encore appelée parfois en dispersion aqueuse homogénéisée.

Le principe de ce procédé est le suivant:

1. les réactifs sont prémélangés à température ambiante dans un premier réacteur, appelé autoclave de mélange, dans des conditions d'agitation bien définies;
2. ce mélange passe ensuite dans un homogénéiseur où le chlorure de vinyle, contenant la poly-ε-caprolactone dissoute, est emulsionné dans l'eau par voie mécanique;
3. à la sortie de l'homogénéiseur, l'émulsion est envoyée dans le second réacteur, appelé autoclave de polymérisation;
4. après homogénéisation complète de la charge, on amène l'autoclave de polymérisation à la température de polymérisation.

On utilise deux réacteurs de laboratoire en acier inoxydable de 3 litres de contenance, munis d'une double enveloppe pour la circulation d'un fluide caloporteur, d'un agitateur à pales conventionnel en acier inoxydable, d'un jeu de tubes jaugeurs pour introduction des réactifs, d'un système classique de régulation de température et un homogénéiseur de laboratoire en acier inoxydable, équipé d'un clapet d'homogénéisation, connecté aux deux réacteurs.

Etape 1

On effectue sur toute l'installation trois mises sous vide, suivies de rinçages à l'azote. On isole ensuite le réacteur de polymérisation est l'homogenéiseur. L'autoclave de mélange étant sous balayage à l'azote et à 25°C, on introduit 0,47 g de catalyseur organométallique, exprimé en aluminium. On isole le réacteur et on met l'agitateur en marche (250 t/min.). On introduit 1000 g de chlorure de vinyle, par tube jaugeur, et on chauffe le contenu à 50°C. La température de consigne atteinte, on introduit 100 g d'ε-caprolactone par tube jaugeur (temps = $t_o$). Après 90 min., le contenu est refroidi à 20°C. On arrête ensuite l'agitation. Le taux de conversion est estimé à 99% (essai à blanc).

Etape 2

Cinq minutes après l'arrêt de l'agitation, on introduit en 15 min., par tube jaugeur, 1350 g d'un solution aqueuse à 6,3 g/l de laurylbenzènesulfonate de sodium. On remet l'agitation en marche (250 t/min.). Après 5 min., on introduit, par tube jaugeur, 2,5 g de peroxyde de dilauroyle et 0,6 g de peroxydicarbonate de dimyristyle dissous dans 25 $cm^3$ de dichlorométhane. 20 min. après l'introduction des initiateurs, on ouvre les vannes reliant l'homogénéiseur aux deux réacteurs. On met l'homogéneiseur en route en réglant la pression de service à 200 bars et on fait tourner l'agitateur de l'autoclave de polymérisation à 150 t/min. Lorsque tout le mélange est transféré, via l'homogénéiseur, dans le second réacteur, celui-ci est isolé. Le contenu est porté alors à 57°C. Après une chute de 1 bar, on chauffe le contenu de l'autoclave de polymérisation à 80°C. Lorsque la pression atteint 6 bars, on réduit l'agitation à environ 50 t/min. et on

dégaze. La pression atmosphérique atteinte, on amène le latex à ébullition en tirant sous vide. Après 20 min. d'ébullition, le latex est refroidi à température ambiante. Le latex obtenu contient 40% de matières sèches à base de polychlorure de vinyle modifié par de la poly-ε-caprolactone, se présentant sous la forme de particules sphériques de distribution étalée de 0,05 à 2 µm. La résine obtenue après séchage par atomisation a une teneur en chlore de 490 g/kg (composition PVC—PCL ≃ 86—14).

Exemple 7

Cet exemple illustre la fabrication d'un copolymère statistique de chlorure de vinyle et d'acrylate de 2-éthylhexyle modifié par un copolymère statistique d'ε-caprolactone et de méthacrylate de glycidyle.

On utilise un réacteur de laboratoire identique à celui utilisé à l'exemple 1.

Etape 1

On effectue trois mises sous vide, suivies de rinçages à l'azote. Sous balayage à l'azote et à 25°C, on introduit 0,95 g de catalyseur organométallique, exprimé en aluminium. On isole le réacteur et on met l'agitateur en marche (250 t/min.). On introduit 656 g de chlorure de vinyle, par tube jaugeur, et on chauffe le contenu du réacteur à 40°C. La température de consigne atteinte, on introduit 175,7 g d'ε-caprolactone et 24,3 g de méthacrylate de glycidyle par tube jaugeur (temps = $t_o$).

A $t_o$ + 6 heures, on arrête l'agitation. Le taux de conversion du copolymère statistique d'ε-caprolactone et de méthacrylate de glycidyle est estimé à 90% (essai à blanc).

Etape 2

Cinq minutes après l'arrêt de l'agitation, on introduit en 15 min., par tube jaugeur, 1200 g d'eau contenant 4,8 g d'alcool polyvinylique. On remet l'agitateur en marche (500 t/min.) et on refroidit le contenue du réacteur à 30°C. On injecte ensuite 1,6 g de peroxyde de lauroyle et 0,8 g de peroxydicarbonate de dicétyle dissous dans 20 cm$^3$ de dichlorométhane.

Le contenu du réacteur est porté à la température de 54°C. A 54°C (temps = $t_o$), on introduit progressivement en 4 heures 144 g d'acrylate de 2'éthylhexyle. Lorsque la pression a chuté de 4,4 bars, on introduit 12,5 cm$^3$ d'ammoniac 2N, on refroidit le contenu du réacteur, on réduit l'agitation à environ 50 t/min. et on dégaze. A pression amtosphérique, on effectue on traitement thermique (15 min. à 75°C), on refroidit le contenu du réacteur et on élimine le chlorure de vinyle résiduaire par traitement avec de la vapeur d'eau. Après essorage et séchage, on recueille 794 g de résine de copolymère statistique de chlorure de vinyle et d'acrylate de 2-éthylhexyle modifié par un copolymère statistique d'ε-caprolactone et de méthacrylate de glycidyle sous la forme de grains sphériques blanchâtres de diamètre moyen d'environ 150 µm.

La résine obtenue (échantillon 1) a été comparée avec un mélange externe de copolymère statistique fabriqué dans les conditions de l'étape 2 et du copolymère statistique de l'étape 1 (échantillon 2).

Les deux échantillons ont été examinés dans une composition contenant, pour 100 parties en poids de résine, 2 parties d'un stabilisant à l'étain, 0,15 partie d'un lubrifiant et 1 partie d'un agent polymérique facilitant la mise en oeuvre. Des prémélanges de 150 g chacun ont été malaxés sur un malaxeur à cylindres.

Dans le Tableau III en annexe, on a rassemblé les résultats des évaluations des échantillons 1 et 2.

Exemple 8

Cet exemple illustre la fabrication de polychlorure de vinylidène modifié par de la poly-ε-caprolactone.

On utilise un réacteur de laboratoire en acier émaillé de 40 litres de contenance, muni d'une double enveloppe pour la circulation d'un fluide caloporteur, d'un agitateur à pales conventionnel en acier émaillé, d'un jeu de tubes jaugeurs pour l'introduction des réactifs et d'un système classique de régulation de température.

Etape 1

On effectue 2 mises sous vide (à 66,5 mbars), suivies d'un rinçage à l'azote. On introduit, par tube jaugeur, 13500 g de chlorure de vinylidène, 1500 g d'ε-caprolactone et 6,9 g de catalyseur organométallique, exprimé en aluminium. On isole le réacteur et on met l'agitateur en marche (100 t/min.). On chauffe le contenu du réacteur à 30°C (temps = $t_o$). Après 8 h 30 mins. de marche (temps = $t_o$ + 8 h 30 min.) on stoppe l'agitation et on prélève 306,4 g de solution (1). Après évaporation de la solution (1), on obtient 10 g de poly-ε-caprolactone (taux de conversion: 3%).

Etape 2

Après prévèlement de la solution, on introduit 20250 cm$^3$ d'eau déminéralisée et 5250 cm$^3$ de solution aqueuse à 10 g/l de méthylhydropropylcellulose.

On remet l'agitateur en marche (160 t/min.) et on chauffe le contenu du réactuer à 80°C.

On introduit alors 1000 cm$^3$ d'une solution à 165 g/l de dilauroyl peroxyde (temps = $t_o$). Après 14 heures (temps = $t_o$ + 14 h), on dégaze en refroidissant.

Après dégazage, on démarre la mise sous vide et on porte la température à 70°C. On tire sous vide

pendant 4 h, ensuite on refroidit et on casse le vide.

Après essorage, filtrage et lavaage à température ambiante et séchage en lit fluidisé à 65°C, on obtient environ 10.000 g de résine de polychlorure de vinylidène modifié par de la poly-ε-caprolactone d'aspect légèrement rosâtre et titrant 70,1% en poids de chlore.

Exemple 9

Cet exemple illustre la fabrication d'un copolymère statistique de chlorure de vinyle et de chlorure de vinylidène modifié par de la poly-ε-caprolactone.

On utilise un réacteur de laboratoire en acier émaillé identique à celui utilisé à l'exemple 8.

Etape 1

On effectue 2 mises sous vide (66,5 mbars), suivies d'un rinçage à l'azote. On introduit, par tube jaugeur, 12.150 g de chlorure de vinylidène, 300 g d'ε-caprolactone et 1,6 g de catalyseur oragnométallique exprimé en aluminium. On introduit ensuite 2.850 g de chlorure de vinyle. On isole le réacteur et on met l'agitateur en marche (100 t/min.). On chauffe le contenu du réacteur à 30°C (temps = $t_o$).

A $t_o$ + 8 heures, on stoppe l'agitation. Le taux de conversion de la poly-ε-caprolactone est estimé à 81% (essai à blanc).

Etape 2

On introduit, par tube jaugeur, 22.500 $cm^3$ d'eau déminéralisée et 3000 $cm^3$ de solution aqueuse à 10 g/l de méthylhydroxypropylcellulose.

On remet l'agitateur en marche (140 t/min.) et on chauffe le contenu du réacteur à 80°C.

A 80°C, on introduit 1000 $cm^3$ d'un solution à 165 g/l de peroxyde de dilauroyle (temps = $t_o$).

A $t_o$ + 8 heures, on dégaze en refroidissant. Après dégazage, on démarre la mise sous vide et on porte la température à 70°C. On tire sous vide pendant 4 h, ensuite, on refroidit et casse la vide.

Aprés essorage, filtrage et lavage à température ambiante et séchage en lit fluidisé à 65°C, on obtient environ 9.000 g de résine de copolymère statistique de chlorures de vinyle et de vinylidène modifié par de la poly-ε-caprolactone. Cette résine présente les caractéristiques suivantes:

— viscosité relative à 10 g/l de DMF = 1,32
à 10 g/l de THF = 1,44;
— porosité par absorption à froid du DOP = 28,2%.
(norme iso: 4608).

Exemple 10

Cet exemple illustre la fabrication de polyfluorure de vinylidène modifié par de la poly-ε-caprolactone.

On utilise un réacteur de laboratoire en acier inoxydable identique à celui utilisé à l'exemple 1, si ce n'est qu'il a une contenance de 5 litres.

Etape 1

On effectue 3 mises sous vide suivies de rinçage à l'azote. Sous balayage à l'azote et à 150°C, on introduit 0,54 g de catalyseur organométallique, exprimé en aluminium. On isole le réacteur et on met l'agitateur en marche (250 t/min.). On introduit 950 g de fluorure de vinylidène et on chauffe le contenue du réacteur à 23°C. La température de consigne atteinte, on introduit 100 g d'ε-caprolactone par tube jaugeur (temps = $t_o$).

Après 6 heures de marche à 23°C (temps = $t_o$ + 6 h), on arrête l'agitation. Le taux de conversion est estimé à 75% (essai à blanc).

Etape 2

Cinq minutes après l'arrêt de l'agitation, on introduit en 15 minutes, par tube jaugeur, 1500 g d'un solution aqueuse à 2 g/l d'hydroxypropylméthylcellulose. On remet l'agitateur en marche (250 t/min.).

On refroidit le contenu du réacteur à 10°C. La température de consigne atteinte, on introduite 20 g de peroxydicarbonate de diéthyle. On chauffe le contenu du réacteur à 45°C. Après 1 heure de marche à 45°C, on dégaze à la pression atmosphérique et on tire sous vide pour terminer le dégazage.

Après essorage, filtrage et lavage à température ambiante et séchage en étuve à 80°C, on obtient 410 g de résine de polyfluorure de vinylidène modifié par de la poly-ε-caprolactone contenant environ 50% en poids de fluor.

Tableau I

| Propriétés évaluées | Echantillon 1 | Echantillon 2 | Echantillon 3 |
|---|---|---|---|
| | PVC modifié selon l'exemple 1 | PVC | PVC + PEPI (90:10) |
| Sur crêpe : | | | |
| Comportement au malaxage | gélification normale, crêpe avec fort retrait | gélification normale, crêpe inerte | gélification difficile, crêpe inerte |
| Aspect du crêpe | satiné, quasi transparent | brillant, transparent | satiné, translucide |
| Longueur du crêpe, cm | 15 | 29 | 31 |
| Sur plaque : | | | |
| Point Vicat B (méthode B) sous 5 kg (Norme NF T51-021), °C | 78 | 80 | 78 |
| Résilience Charpy (norme DIN 53453, éprouvettes entaillées), $J/m^2$ | 3,2 | 2,8 | 19,1 |

Tableau II

| Propriétés évaluées | Echantillon 1 | Echantillon 2 | Echantillon 3 |
|---|---|---|---|
| | PVC modifié selon l'exemple 4 | Copolymère VC-AEH + poly-ε-caprolactone (80:20) | Copolymère VC-AEH + DOP (80:20) |
| **Sur crêpe :** | | | |
| Comportement au malaxage | gélification normale, crêpe avec très fort retrait | gélification difficile, crêpe avec fort retrait | gélification normale, crêpe inerte |
| Aspect du crêpe | satiné | satiné | satiné, léger collage |
| Longueur du crêpe, cm | 18 | 20 | 44 |
| **Sur plaque :** | | | |
| Aspect | quasi transparent | léger trouble | opalescent |
| Dureté Shore A initiale à 23°C (norme NF T51-109) | 77 | 87 | 87 |

Tableau III

| Propriétés évaluées | Echantillon 1 | Echantillon 2 |
|---|---|---|
| Sur crêpe : | | |
| Comportement au malaxage | Gélification impossible à 200°C, même après une durée supérieure à 15 min. | Gélification à 160°C. Retrait important à l'enlèvement du crêpe. |
| Aspect du crêpe | - | satiné |
| Longueur du crêpe, cm | - | 20 |

**Revendications**

1. Procédé pour la fabrication de polymères d'halogénures de vinyle modifiés par des polymères de composés hétérocycliques oxygénés, caractérisé en ce que, dans une première étape, on polymèrise par voie ionique un composé hétérocyclique oxygéné dans un halogénure de vinyle et, dans un deuxième étape, on polymérise par voie radicalaire en dispersion aqueuse et en présence du milieu de polymérisation provenant de l'étape première ledit halogénure de vinyle, éventuellement additionné d'autre monomères insaturés polymérisables par voie radicalaire.

2. Procédé pour la fabrication de polymères d'halogénures de vinyle modifiés suivant la revendication 1, caractérisé en ce que le composé hétérocyclique oxygéné est choisi parmi les éthers et les esters cycliques.

3. Procédé pour la fabrication de polymères d'halogénures de vinyle modifiés suivant les revendications 1 et 2, caractérisé en ce que le composé hétérocyclique oxygéné est un éther cyclique choisi parmi les oxydes d'éthylène et de propylène, l'épichlorhydrine, l'éther allylglycidylique, le méthacrylate de glycidyle et leurs mélanges.

4. Procédé pour la fabrication de polymères d'halogénures de vinyle modifiés suivant les revendications 1 et 2, caractérisé en ce que le composé hétérocyclique oxygéné est un ester cyclique choisi parmi la propiolactone, la caprolactone et l'oenantholactone.

5. Procédé pour la fabrication de polymères d'halogénures de vinyle modifiés suivant la revendication 4, caractérisé en ce que l'ester cyclique est la caprolactone.

6. Procédé pour la fabrication de polymères d'halogénures de vinyle modifiés suivant la revendication 1, caractérisé en ce que l'halogénure de vinyle répond à la formule générale:

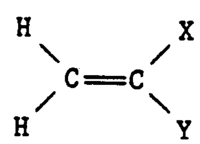

dans laquelle X représente un atome d'halogène et Y représente un atome d'hydrogène ou d'halogène identique ou différent de X.

7. Procédé pour la fabrication de polymères d'halogénures de vinyle modifiés suivant la revendication 1, caractérisé en ce que l'halogénure de vinyle est choisi parmi les chlorures et les fluorures de vinyle et de vinylidène.

8. Procédé pour la fabrication de polymères d'halogénures de vinyle modifiés suivant la revendication 1, caractérisé en ce que l'halogénure de vinyle est le chlorure de vinyle.

9. Procédé pour la fabrication de polymères d'halogénures de vinyle modifiés suivant la revendication 1, caractérisé en ce que, dans la première étape, la polymérisation par voie ionique s'effectue à l'intervention d'un catalyseur anionique coordiné de formule générale:

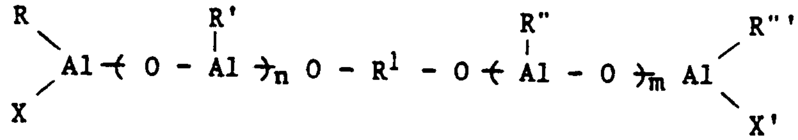

dans laquelle n et m représentent des nombres entiers compris entre 0 et 10 dont la somme égale au moins 1; R, R', R'' et R''' représentent des groupes hydrocarbonés contenant de 1 à 18 atomes de carbone; X et X' représentent de l'hydrogène, du chlore ou un groupe R; et $R^1$ représente un groupe hydrocarboné contenant de 2 à 20 atomes de carbone.

10. Procédé pour la fabrication de polymères d'halogénures de vinyle modifiés suivant la revendication 1, caractérisé en ce que dans la deuxième étape la polymérisation par voie radicalaire en dispersion aqueuse s'effectue en suspension aqueuse.

**Patentansprüche**

1. Verfahren zur Herstellung von Vinylhalogenidpolymeren modifiziert durch Polymere von sauerstoffhaltigen, heterozyklischen Verbindungen, dadurch gekennzeichnet, daß man in einer ersten Stufe auf ionischem Weg eine sauerstoffhaltige, heterozyklische Verbindung in einem Vinylhalogenid polymerisiert und in einer zweiten Stufe auf radiakalartigem Weg in wässriger Dispersion und in Anwesenheit des Polymerisationsmilieus aus der ersten Stufe, das Vinylhalogenid, dem gegebenenfalls andere ungesättigte, auf radikalartigem Weg polymerisierbare Monomere zugefügt wurden, polymerisiert.

2. Verfahren zur Herstellung von modifizierten Vinylhalogenidpolymeren gemäß Anspruch 1, dadurch gekennzeichnet, daß die sauerstoffhaltige, heterozyklische Verbindung ausgewählt ist unter den zyklischen Ethern und Estern.

3. Verfahren zur Herstellung von modifizierten Vinylhalogenidpolymeren gemäß den Ansprüchen 1 und 2, dadurch gekennzeichnet, daß die sauerstoffhaltige, heterozyklische Verbindung ein zyklischer Ether ist, ausgewahlt aus den Ethylen- und Propylenoxyden, Epichlorhydrin, Allylglycidylether, Glycidylmethacrylat und ihren Mischungen.

4. Verfahren zur Herstellung von modifizierten Vinylhalogenidpolymeren gemäß den Ansprüchen 1 und 2, dadurch gekennzeichnet, daß die sauerstoffhaltige, heterozyklische Verbindung ein zyklischer Ester ist, augewählt aus Propiolacton, Caprolacton und Oenantholacton.

5. Verfahren zur Herstellung von modifizierten Vinylhalogenidpolymeren gemäß Anspruch 4, dadurch gekennzeichnet, daß zyklische Ester Caprolacton ist.

6. Verfahren zur Herstellung von modifizierten Vinylhalogenidpolymeren gemäß Anspruch 1, dadurch gekennzeichnet, daß das Vinylhalogenid der allgemeinen Foreml:

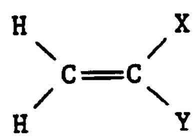

entspricht, in der X ein Halogenatom und Y ein Wasserstoffatom oder mit X identisches oder dazu unterschiedliches Halogenatom darstellt.

7. Verfahren zur Herstellung von modifizierten Vinylhalogenidpolymeren gemäß Anspruch 1, dadurch gekennzeichnet, daß das Vinylhalogenid ausgewählt ist unter den Vinylchloriden und -fluoriden und Vinylidenchloriden und -fluoriden.

8. Verfahren zur Herstellung von modifizierten Vinylhalogenidpolymeren gemäß Anspruch 7, dadurch gekennzeichnet, daß das Vinylhalogenid Vinylchlorid ist.

9. Verfahren zur Herstellung von modifizierten Vinylhalogenidpolymeren gemäß Anspruch 1, dadurch gekennzeichnet, daß in der ersten Stufe die Polymerisation auf ionischem Weg durch Einwirkung eines koordinierten, anionischen Katalysators der allgemeinen Formel:

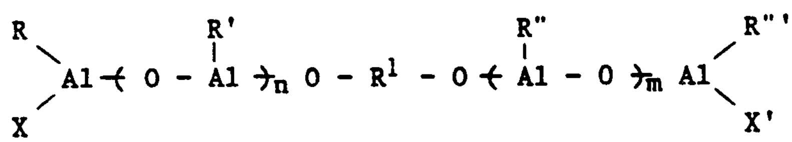

stattfindet, in der n und m ganze Zahlen zwischen 0 und 10, deren Summe wengistens gleich 1 ist, darstellen, R, R', R'' und R''' Kohlenwasserstoffgruppen mit 1 bis 18 Kohlenstoffatomen darstellen, X und

X' Wasserstoff, Chlor oder eine Gruppe R darstellen und $R^1$ eine Kohlenwasserstoffgruppe mit 2 bis 20 Kohlenstoffatomen darstellt.

10. Verfahren zur Herstellung von modifizierten Vinylhalogenidpolymeren gemäß Anspruch 1, dadurch gekennzeichnet, daß in der zweiten Stufe die Polymerisation auf radikalartigem Weg in wässriger Dispersion in wässriger Suspension stattfindet.

**Claims**

1. Process for the manufacture of vinyl halide polymers modified with polymers of heterocyclic oxygen compounds, characterized in that, in a first stage, a heterocyclic oxygen compound is polymerized by an ionic route in a vinyl halide and, in a second stage, the said vinyl halide, to which other unsaturated monomers capable of being polymerized by a radical route may be added if desired, is polymerized by a radical route in aqueous dispersion and in the presence of the polymerization mixture originating from the first stage.

2. Process for the manufacture of vinyl halide polymers modified according to Claim 1, characterized in that the heterocyclic oxygen compound is chosen from cyclic ethers and esters.

3. Process for the manufacture of vinyl halide polymers modified according to Claims 1 and 2, characterized in that the heterocyclic oxygen compound is a cyclic ether chosen from ethylene and propylene oxides, epichlorohydrin, allyl glycidyl ether, glycidyl methacrylate and mixtures thereof.

4. Process for the manufacture of vinyl halide polymers modified according to Claims 1 and 2, characterized in that the heterocyclic oxygen compound is a cyclic ester chosen from propiolactone, caprolactone and oenantholactone.

5. Process for the manufacture of vinyl halide polymers modified according to Claim 4, characterized in that the cyclic ester is caprolactone.

6. Process for the manufacture of vinyl halide polymers modified according to Claim 1, characterized in that the vinyl halide corresponds to the general formula:

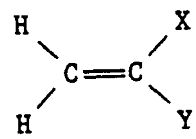

in which X denotes a halogen atom and Y denotes a hydrogen atom or a halogen atom which is identical with or different from X.

7. Process for the manufacture of vinyl halide polymers modified according to Claim 1, characterized in that the vinyl halide is chosen from vinyl and vinylidene chlorides and fluorides.

8. Process for the manufacture of vinyl halide polymers modified according to Claim 7, characterized in that the vinyl halide is vinyl chloride.

9. Process for the manufacture of vinyl halide polymers modified according to Claim 1, characterized in that, in the first stage, the ionic polymerization is carried out with the use of a coordinated anionic catalyst of general formula:

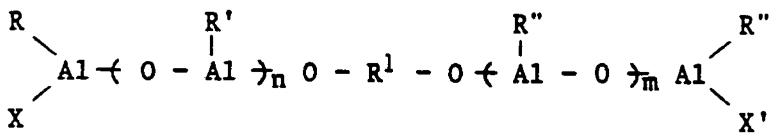

in which n and m denote integers from 0 to 10, whose sum is at least 1; R, R', R'', and R''' denote hydrocarbon groups containing from 1 to 18 carbon atoms; X and X' denote hydrogen, chlorine or a group R; and $R^1$ denotes a hydrocarbon group containing from 2 to 20 carbon atoms.

10. Process for the manufacture of vinyl halide polymers modified according to Claim 1, characterized in that, in the second stage, the radical polymerization in aqueous dispersion is carried out in aqueous suspension.